# EUROPÄISCHE PATENTSCHRIFT

(11) **EP 2 891 641 B1**
(45) Veröffentlichungstag und Bekanntmachung des Hinweises auf die Patenterteilung: **16.05.2018**
(21) Anmeldenummer: 14194671.5
(22) Anmeldetag: 25.11.2014
(51) Int. Cl.: C04B 38/00, C04B 35/653, B01D 29/31, C03C 3/091

(54) **Porenkörper mit vergrößerter spezifischer Oberfläche und Verfahren zur Herstellung eines solchen Porenkörpers**
Porous body with enlarged specific surface and method for manufacturing such a porous body
Corps poreux ayant une surface spécifique agrandie et procédé de fabrication d'un tel corps poreux

(30) Priorität: 02.01.2014 DE 102014100025
(43) Veröffentlichungstag der Anmeldung: 08.07.2015
(73) Patentinhaber: Denk Aqua GmbH, 96450 Coburg (DE)
(72) Erfinder: Denk, Fabian, 96450 Coburg (DE)
(74) Vertreter: Engel, Christoph Klaus

(56) Entgegenhaltungen:
- WO-A1-00/13768
- DE-A1- 2 261 134

## Beschreibung

Die vorliegende Erfindung betrifft einen keramischen Porenkörper mit vergrößerter spezifischer Oberfläche. Dieser Porenkörper umfasst einen Trägerkörper, der zahlreiche sich zwischen einem Eingang und einem Ausgang erstreckende Kanäle aufweist. Der Trägerkörper ist aus einer Mehrzahl von Körnern gebildet, die oxidische und/oder nicht oxidische Hartkörper umfassen und die durch ein keramisches Verbindungsmittel miteinander verbunden sind. Dabei sind zwischen den Körnern Hohlräume ausgebildet, die miteinander so verbunden sind, dass sie die zwischen dem Eingang und dem Ausgang des Trägerkörpers sich erstreckenden Kanäle bilden.

Durch den genannten Aufbau ist ein derartiger Porenkörper grundsätzlich geeignet, dass ein Fluid durch die Hohlräume im Porenkörper strömen kann, wobei es am Eingang des Porenkörpers in diesen eintritt und am Ausgang austritt.

Die vorliegende Erfindung betrifft damit insbesondere eine Verbesserung eines Porenkörpers, wie er in der DE 10 2013 108 002 A1 beschriebenen ist, welche vom selben Anmelder stammt und zum Anmeldezeitpunkt der vorliegenden Patentanmeldung noch nicht veröffentlicht war. Die Offenbarung dieser früheren Patentanmeldung wird in Bezug auf den Aufbau des dort beschriebenen Porenkörpers, der ein Zwischenprodukt für die Erzeugung des erfindungsgemäßen Porenkörpers darstellt, sowie dessen Einsatzmöglichkeiten in die vorliegende Patentanmeldung ausdrücklich einbezogen.

In der Technik sind allgemein Porenkörper erwünscht, die eine hohe Temperaturbeständigkeit aufweisen, um sie als Abgasfilter, Katalysatorträger und dergleichen verwenden zu können. Da die Temperaturanforderungen an den Porenkörper in einem Filter und einem Katalysator sehr hoch sind, eignen sich keramische Werkstoffe insbesondere als ein Trägermaterial solcher Filter und Katalysatoren.

In der EP 0 586 815 A1 ist eine poröse Keramik beschrieben, die Poren > 5µm aufweist und aus miteinander verbundenen Teilchen kugelförmiger und kantiger Gestalt mit einem Äquivalenzdurchmesser ≤1 mm besteht. Derart kleine Poren gestatten zwar die Ausbildung einer großen spezifischen Oberfläche, ermöglichen aber nur einen vergleichsweise geringen Volumendurchsatz für ein zu filterndes bzw. zu behandelndes Gas oder Fluid.

Durch den in der DE 10 2013 108 002 A1 beschriebenen Gegenstand ist es gelungen, einen Körper aus keramischen Werkstoffen herzustellen, durch den ein großes Volumen eines Fluids strömen kann, da Kanäle mit vergleichsweise großem Querschnitt zur Verfügung stehen. Dazu bilden die zwischen Körnern ausgebildeten Hohlräume durchgängige Kanäle aus, die einen Äquivalenzdurchmesser im Bereich von 1 bis 7 mm aufweisen. Allerdings hat sich gezeigt, dass die spezifische Oberfläche dieses vorbekannten Körpers aufgrund der relativ glatten, glasähnlichen Oberfläche zu gering ist, da insbesondere Mikroporen nicht oder nur in sehr geringer Anzahl zur Verfügung stehen.

Die WO 00/13768 A1 zeigt eine unterstütze Glasmembran zur Gastrennung sowie ein Verfahren zu deren Herstellung. Der verwendete Träger besteht z.B. aus Al₂O₃, welches nach einem Sintervorgang Poren aufweisen kann. Auf diesem Träger aus Keramik ist eine Glasschicht aufgebracht.

Die DE 22 61 134 A1 beschreibt einen Katalysatorträger aus porösem Glas, wobei die Glasschicht durch Trennung der säurelöslichen und der säureunlöslichen Phase erzeugt wird. Als Träger kommt beispielsweise ein zylindrischer Wabenkörper aus Spodumen zum Einsatz.

Die Aufgabe der vorliegende Erfindung besteht daher darin, einen verbesserten Porenkörper bereit zu stellen, der unter Beibehaltung von Kanälen mit einem Äquivalenzdurchmesser im Bereich von 1 bis 7 mm eine deutlich größere spezifische Oberfläche aufweist, insbesondere an den Oberflächen dieser vom Eingang zum Ausgang des Porenkörpers verlaufenden Kanäle, sodass das hindurch strömende Fluid mit einer großen Oberfläche bzw. den dort ggf. zusätzlich abgelagerten katalytischen Stoffen in Kontakt kommt. Ebenso soll ein Verfahren zur Herstellung eines derart verbesserten Porenkörpers bereitgestellt werden.

Diese Aufgabe wird erfindungsgemäß durch einen Porenkörper gemäß dem beigefügten Anspruch 1 gelöst. Weiterhin wird die Aufgabe durch ein Verfahren gemäß dem beigefügten Anspruch 7 gelöst.

Der erfindungsgemäße Porenkörper zeichnet sich dadurch aus, dass der aus der DE 10 2013 108 002 A1 bekannte Körper einen Trägerkörper bildet, wobei mindestens an der zu den Kanälen gerichteten Oberfläche des Trägerkörpers zumindest abschnittsweise eine Oberflächenbeschichtung aus porösem Glas stoffschlüssig aufgebracht ist.

Der Trägerkörper besteht zunächst in an sich bekannter Weise aus einer Mehrzahl von Körnern, die oxidische und/oder nicht oxidische Hartkörper umfassen. Der Trägerkörper umfasst weiterhin ein keramisches Verbindungsmittel, das auf einem gebrannten bzw. gesinterten feinteiligen Material basiert und das die Körner im gebrannten bzw. gesinterten Zustand in ihrer Position hält. Zwischen den Körnern sind Hohlräume ausgebildet, die miteinander zu Kanälen verbunden sind, so dass ein Gas/Fluid durch die Kanäle im Porenkörper strömen kann, wobei es an einem Eingang des Trägerkörpers eintritt und an einem Ausgang austritt.

Der genannte Hartkörper kann ein keramischer Hartstoff sein. Als harte Körner bzw. Hartkörper werden insbesondere Minerale und/oder Stoffe mit einer Härte >6 nach Mohs Härteskala angesehen. Das keramische Verbindungsmittel hält nach dem Brennen/Sintern die Körner so in ihrer Position, dass einerseits die Körner zueinander mechanisch fixiert sind und andererseits nicht-lineare Kanäle für den Durchgang eines Fluids geschaffen sind. Die zwischen den Körnern verbleibenden Hohlräume weisen einen Äquivalenzdurchmesser von etwa 1 mm bis etwa 7 mm auf, sodass auch die durch die Hohlräume gebildeten Kanäle einen solchen lichten Querschnitt besitzen. Dieser Trägerkörper ist aufgrund seiner keramischen Beschaffenheit sehr temperaturstabil und sehr temperaturbeständig.

Der Trägerkörper kann in nahezu beliebiger Form hergestellt werden und auch in Leitungselemente, beispielsweise Rohre, integriert werden. Durch den Trägerkörper führen verbundene Hohlräume bzw. Kammern, die durch die Schüttkörnerbindung entstehen und zahlreiche Kanäle bilden.

Die Körner können Quarz, Silikat, Basalt, Cordierit (Mg,Fe²⁺)₂(Al₂Si)[Al₂Si₄O₁₈], Siliziumcarbit SiC und/oder Siliziumnitrid Si₃N₄ umfassen. Die Körner können eine Partikelgröße von etwa 0,05 mm bis etwa 20 mm, vorzugsweise von etwa 1 mm bis etwa 5 mm aufweisen. Das verwendete Ausgangsmaterial kann sowohl kugeliger Gestalt, wie auch kantig sein und auch in Mischungen dieser Formen vorliegen.

Das Verbindungsmittel kann ein keramisches, kristallines oder glasartiges gepulvertes Material und/oder ein zuvor verschmolzenes und erneut gemahlenes keramisches feinteiliges Material umfassen. Nach dem Brennen bzw. Sintern hält das Verbindungsmittel die Körner so in ihrer Position, dass zu Kanälen verbundene Hohlräume entstehen, durch die ein Fluid strömen kann. Die Größe der Hohlräume und Kanäle wird von der Größe der Körner bestimmt. Die Hohlräume sind typischerweise geringfügig kleiner als die eingesetzten harten Körner. Durch die Verwendung kleiner Körner können dünne Kanäle von 1 bis 3 mm Durchmesser realisiert werden, die besonders vorteilhaft zur Abgasreinigung verwendet werden können.

Das keramische feinteilige Material, auf dem das Verbindungsmittel beruht, kann Partikel umfassen, die vor dem Brennen/Sintern einen Äquivalenzdurchmesser von weniger als 250 µm, vorzugsweise weniger als 150 µm, höchst bevorzugt von weniger als 50 µm aufweisen. Das Verbindungsmittel kann Feldspat aufweisen.

Die Hohlräume können einen Äquivalenzdurchmesser von 1 bis 7 mm, vorzugsweise 2 bis 5 mm aufweisen. Die Hohlräume können einen Volumenanteil von mehr als 50%, vorzugweise mehr als 75%, höchst vorzugsweise mehr als 97% des Trägerkörpers bilden.

Die verbundenen Hohlräume bilden zumindest einen, in der Praxis aber stets mehrere nicht lineare Kanäle mit einer Tortuosität > 2, vorzugsweise mit einer Tortuosität > 3, höchst vorzugsweise mit einer Tortuosität > 4.

Vorzugsweise besitzt das poröse Glas, welches als Oberflächenbeschichtung auf dem Trägerkörper aufgebracht ist, eine spezifische Oberfläche von 100 bis 150 m²/g. Gemäß einer bevorzugten Ausführung ist das poröse Glas ein Alkaliborosilikatglas. Das Alkaliborosilikatglas weist besonders bevorzugt folgende Bestandteile auf (vom größten zum kleinsten Anteil): SiO₂, B₂O₃, Na₂O, Al₂O₃.

Ein wesentlicher Vorteil des erfindungsgemäßen Porenkörpers besteht darin, dass auf der relativ glatten keramischen Oberfläche des Trägerkörpers, die eine SiO₂ Schicht ist, eine Materialschicht aus porösem Glas (also ebenfalls eine SiO₂ Schicht) durch Brennen/Sintern aufgebracht ist, deren physikalische Eigenschaften mit dem Material des Trägerkörpers nahezu identisch sind, die aber eine stark erhöhte spezifische Oberfläche (Porösität) aufweist. Insbesondere bei großen Temperaturveränderungen treten daher zwischen dem Trägerkörper und der porösen Glasbeschichtung kaum mechanische Spannungen auf.

Die Aufbringung einer Glas auf Glas Schicht bewirkt eine sehr stabile Schicht, da es zu keinen Abplatzungen kommen kann die von verschiedenen Ausdehnungskoeffizienten stammen. Der Quarzanteil im Trägerkörper erweist sich als vorteilhaft, da dieser thermische Wechsel bis zu sehr hohen Temperaturen Stand halten kann. Der üblicherweise bei der Nutzung von Quarz in katalytischen Anwendungen auftretende Nachteil, nämlich die niedrige spezifische Oberfläche wird erfindungsgemäß durch die Kombination mit einer schwammartigem porösem Glasschicht überwunden.

Ein weiterer Vorteil, den der oberflächlich ausgebildete Glasschwamm mit sich bringt, liegt in der Veränderbarkeit der Schwammstruktur. Durch die Variation der Bestandteile des Alkaliborosilikatglases kann die resultierende Schwammstruktur beeinflusst werden. Auch kann nach dem Aufschmelzen eine weitere thermische Behandlung zu einer Vergrößerung der Schwammporen genutzt werden.

Der erfindungsgemäße Porenkörper kann beispielsweise in einem Katalysator, einen Fluidfilter, einem Wassersieb oder einem Abgasfilter eingesetzt werden. Der Porenkörper kann als Diffusor oder als Strömungsverteiler am Austritt einer Leitung angeordnet sein.

Das erfindungsgemäße Verfahren zum Herstellen eines Porenkörpers umfasst die nachfolgend beschriebenen Schritte. Zunächst wird ein Trägerkörper bereitgestellt, wie er beispielsweise in der DE 10 2013 108 002 A1 beschrieben ist (dort ebenfalls als Porenkörper bezeichnet). Der Trägerkörper besitzt zahlreiche sich zwischen einem Eingang und einem Ausgang erstreckende Kanäle und ist gebildet aus einer Mehrzahl von Körnern, die oxidische und/oder nicht oxidische Hartkörper umfassen und die durch ein keramisches Verbindungsmittel miteinander verbunden sind, sodass zwischen den Körnern Hohlräume ausgebildet sind, die miteinander zu den Kanälen verbunden sind. Nachfolgend erfolgt ein stoffschlüssiges Anbringen einer Oberflächenbeschichtung aus porösem Glas zumindest abschnittsweise an der Oberfläche der Kanäle des Trägerkörpers.

Der Trägerkörper selbst lässt sich vorzugsweise durch folgende Schritte erzeugen. Zunächst werden die als Körner vorliegenden Ausgangsstoffe gemischt. Diese Mischung umfasst oxidische und/oder nicht oxidische Hartstoffe, ein Opfermaterial, beispielsweise in Form eines organischen Binders, und ein verschmelzbares feinteiliges Material. Anschließend wird die gemischte Masse in die gewünschte Form geformt. Schließlich wird die Masse erhitzt, um den Trägerkörper zu erhalten. Beim Erhitzen der Masse wird das feinteilige Material zu einem keramischen Material.

Die Masse wird nach dem Formen und vor dem Erhitzen vorzugsweise getrocknet. Hierbei entweicht Wasser, das in dem organischen Binder (Opfermaterial) physikalisch und/oder chemisch gebunden ist. Folglich entstehen zwischen den Körnern erste Hohlräume. Die in der vermischten Masse zwischen den Körnern entstehenden Ansammlungen von Opfermaterial weisen einen Äquivalenzdurchmesser auf, der abhängig ist von der Korngröße und beispielsweise im Bereich von 1 bis 7 mm liegt.

Die vermischte Masse wird dann auf eine Temperatur erhitzt, bei welcher der organische Binder (Opfermaterial) abgebaut wird. Die dabei langsam frei werdenden Abbauprodukte, vor allem Wasser, aus dem organischen Binder müssen die Masse verlassen, bevor mit einer weiteren Temperaturerhöhung begonnen werden kann, in der die Reste des Binders in Form von Kohlenstoff entfernt werden. Der dafür nötige Temperaturbereich liegt zwischen 800°C bis etwa 900°C, je nach verwendetem Binder. Der organische Binder verliert beim Erhitzen zunächst einen großen Teil seines Volumens, bis er bei 800°C bis etwa 900°C vollständig verbrennt. Der organische Binder stellt somit ein Opfermaterial (Platzhalter) dar, der am Ende dieser Temperaturerhöhung abgebrannt wird.

Neben dem organischen Binder wird auch ein keramischer Binder verwendet, der in einem Temperaturbereich > 1.000°C gebrannt bzw. gesintert wird und damit das keramische Verbindungsmittel bildet. Bei etwa 1.000°C beginnen die mineralischen Feinteile des keramischen Binders sich an die Körner zu heften. Mit der steigenden Temperatur ergeben sie eine Schmelze, die an den Stoßstellen der Körner eine Schmelzbrücke bildet und die Körner fest verbindet, sobald die Schmelze starr ist. Die Menge und Zusammensetzung der verschmelzbaren keramisch feinteiligen Materialien bestimmen den Schmelzpunkt, die Festigkeit und weitere technische und chemische Eigenschaften des Trägerkörpers.

Zum Herstellen einer bevorzugten Ausführungsform des Trägerkörpers wird eine Suspension hergestellt, die eine technische Gelatine aufweist, die breiig angesetzt ist, wobei feingemahlener Quarz und/oder Feldspat eingemischt wird. Es werden verschiedene harte Minerale oder ähnliche Stoffe beigemischt, beispielsweise Siliziumcarbit mit einer Korngröße von etwa 1 bis 2 mm. Aufgrund des organischen Binders ist die durch die Suspension erzeugte Masse plastisch und kann in beliebige Formen geformt werden. Insbesondere kann die Masse in einen ein Gehäuse bildenden Körper eingebracht bzw. eingefüllt werden.

Weitere Einzelheiten, Vorteile und Weiterbildungen der vorliegenden Erfindung werden nachfolgend unter Bezugnahme auf die Zeichnungen beschrieben. Es zeigen:
- Fig. 1: eine Querschnittsansicht eines Trägerkörpers in einem Gehäuse;
- Fig. 2: eine fotografische Mikroskopaufnahme der noch nicht beschichteten Oberfläche in Kanälen des Trägerkörpers;
- Fig. 3: eine fotografische Mikroskopaufnahme der mit porösem Glas beschichteten Oberfläche in den Kanälen des Trägerkörpers.

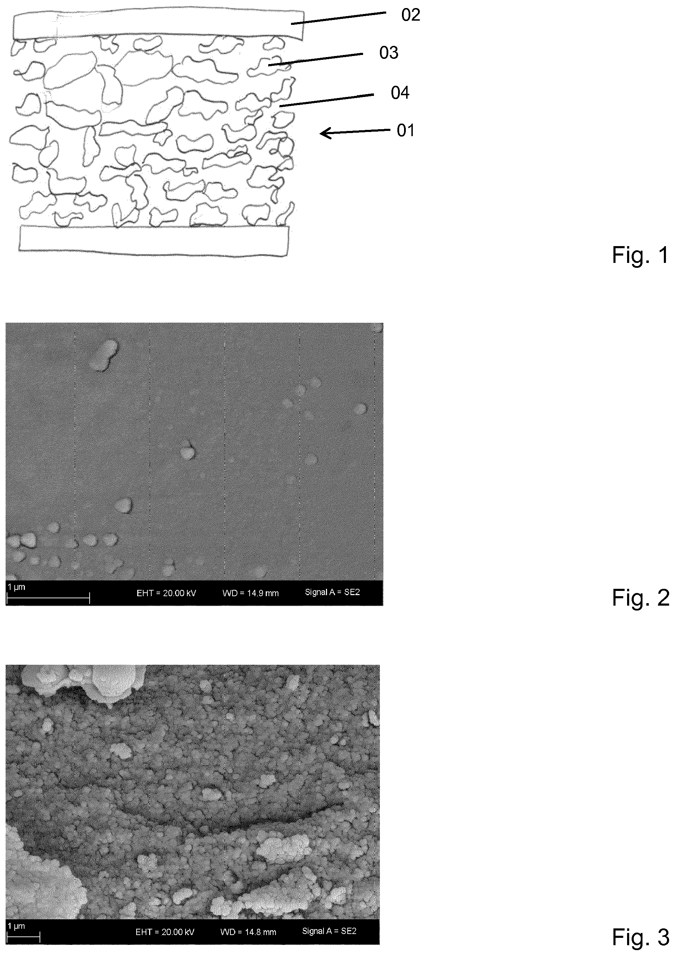

Fig. 1 zeigt einen Trägerkörper 01, der in einem Gehäuse 02 ausgebildet ist. Zwischen zahlreichen Körnern 03 sind Hohlräume ausgeformt, die mehrere Kanäle 04 bilden, durch welche später ein Gas/Fluid strömen kann. Dadurch ist es möglich, den Trägerkörper als Filter oder als Trägermaterial für einen Katalysator zu verwenden.

Der hier dargestellte Trägerkörper wurde wie folgt erzeugt. In einer Suspension werden Körner mit einem feinstteiligen keramischen Material sowie mit organischen Bindern gemischt. Die Körner umfassen oxidische und/oder nicht oxidische Hartstoffe, insbesondere Quarz, Silikat, Basalt, Cordierit, Siliziumcarbit und/oder Siliziumnitrid. Die Größe der Körner beträgt etwa 1 mm bis etwa 20 mm. Der organische Binder kann beispielsweise Zucker, Hefen, Zelluloseleime und/oder technische Gelatine umfassen. Die keramisch feinstteiligen Materialien können Feldspat (CaAl₂O₈), Natron-Feldspat, Dolomit (CaMg(CO₃)₂), Lithiumcarbonat (Li₂CO₃), Talkum (Mg₃(OH)₂Si₄O₁₀), Magnesiumcarbonat (MgCO₃), Mullit (Al₆Si₂O₁₃), Soda (Na₂CO₃), Steatit oder dergleichen und/oder beliebige Mischungen daraus aufweisen. Es können auch sogenannte Fritten verwendet werden, die bereits eine vorgemischte, gebrannte und wieder zerkleinerte Materialfraktion der zuvor genannten Materialien umfassen. Die bereits verschmolzenen und danach erneut gemahlenen Materialien unterscheiden sich z.B. durch die Zersetzung der Karbonate unter Kohlenstoffdioxidabspaltung von ihren Ausgangsmaterialien und besitzen dadurch veränderte Eigenschaften.

Nachdem die hergestellte Mischung getrocknet wurde, hat der organische Binder einen Großteil des darin enthaltenen Wassers abgegeben und dadurch deutlich an Volumen verloren. Dadurch entstehen vergleichsweise große Hohlräume zwischen den Körnern. Ferner hat sich das feinstteilige keramische Material an den Körnern angelagert. Die Trocknung kann in Abhängigkeit der Größe des Trägerkörpers etwa 24 h bei Raumtemperatur erfolgen. Ein weiterer Trocknungsschritt kann etwa 36 h bei einer Temperatur von etwa 80°C folgen.

Zum Brennen bzw. Sintern der Masse zu dem Trägerkörper wird die Masse in einen Ofen gebracht. Die Temperatur im Ofen steigt innerhalb von 4 h von Raumtemperatur auf 400°C an. Bei diesem Schritt kann weiteres Wasser entweichen. Anschließend wird die Temperatur innerhalb von 2 h von 400°C auf 800°C erhöht und dort für etwa 1 h gehalten. Bei der Temperatur von 800°C ist der organische Binder als Opfermaterial restlos verbrannt, so dass die Hohlräume zwischen den Körnern vollständig ausgeformt sind. Anschließend wird die Temperatur innerhalb von 1,5 h von 800°C auf 1200°C erhöht. Es folgt eine kurzzeitige Erhitzung auf 1.250°C für etwa 5 min und sodann eine langsame Verringerung der Temperatur innerhalb von weiteren 1,5 h von 1250°C wieder auf 1000°C. Während dieses Temperaturprofils schmelzen die mineralischen Binder und ergeben eine Schmelze, die die Körner als keramisches Verbindungsmittel miteinander verbindet.

Anschließend wird der Trägerkörper innerhalb von etwa 6,5 h abgekühlt. Nunmehr erfolgt in den weiteren, nachfolgend beispielhaft beschriebenen Schritten die Beschichtung der Oberflächen in den ausgebildeten Hohlräumen, welche die Kanäle 04 bilden.

Dafür muss zunächst eine geeignete Materialmischung bereitgestellt werden, die im Weiteren ein poröses Glas als Beschichtung bildet. Vorzugsweise handelt es sich um ein Alkaliborosilikatglas folgender Zusammensetzung:
62% SiO₂
30% B₂O₃
7% Na₂O
1% Al₂O₃

Die genannten Anteile weichen vorzugsweise nicht mehr als jeweils 1% von den genannten Werten ab. Diese Materialmischung wird auf eine Kornfraktion < 100 µm gemahlen und als Fritte eingesetzt. Die Fritte wird hochviskos mit Aceton als leichtflüchtigem Lösungsmittel angesetzt. Der Trägerkörper wird in diese Fritte getaucht, wodurch die Fritte an den Oberflächen in den Kanälen anhaftet, und dann an Luft getrocknet. Danach wird der mit der Fritte benetzte Trägerkörper auf 200°C erwärmt, für etwa 1 h und bei einer Heizrate von etwa 3 K/min. Anschließend wird der Trägerkörper auf 700 bis 1.000°C, vorzugsweise auf etwa 780°C erhitzt, für 20 bis 40 min, vorzugsweise etwa 30 min und bei einer Heizrate von etwa 3 K/min. Dadurch wird die o.g. Materialmischung an die Oberfläche des Trägerkörpers, die aufgrund ihrer keramischen Beschaffenheit im wesentlichen eine SiO₂-Schicht darstellt, gesintert. Es entsteht ein homogener Überzug der Oberfläche des Trägerkörpers mit Alkaliborosilikatglas.

Das die Oberflächenbeschichtung bildende poröse Glas wird nachfolgend durch Extraktion mit verdünnter Salzsäure (vorzugsweise 0,1 M Lösung, im 20 fachen Überschuss zur Masse des Trägerkörpers) erhalten, indem die säurelöslichen Bestandteile des Glases entfernt werden. Eine derart erzeugte poröse Oberfläche zeigt ein Porenvolumen der neu gebildeten SiO₂ Schicht von ca. 1,2 cm³/g und eine spezifische Oberfläche von ca. 120 m²/g.

Die Temperaturführung, Haltedauer bei verschiedenen Temperaturen und die Abkühlung haben Einfluss auf die resultierende Schwammstruktur. Bei falschem Vorgehen kann kein Glasschwamm erzeugt werden. Wird die Brenn- bzw. Sintertemperatur zu hoch gewählt, geht die später in Säure lösliche Komponente in die Gasphase über und verdampft. Die genannte Extraktion dieser Komponente ist dann nicht mehr möglich.

Im Ergebnis des beschriebenen erfindungsgemäßen Verfahrens ist auf der Quarzschicht des Trägerkörpers eine Schicht aus Alkaliborosilikatglas aufgeschmolzen. Diese wird in eine schwammartige Struktur überführt, indem durch heiße Salzsäure insbesondere der Boranteil entfernt wird. Es entsteht eine poröse Glasschicht, die fest mit der Unterlage verbunden ist. In der porösen Glasschicht können nun je nach späterer Anwendung verschiedene Katalysatormaterialien eingebracht werden. Die entstehenden Katalysatoren sind durch die Grundstruktur des Trägerkörpers mit großen Kanälen ausgestattet, sodass große Fluidströmen möglich sind. Die hohe spezifische Oberfläche der porösen Glasschicht gestattet einen guten Kontakt zwischen dem fein verteilten Katalysatormaterial und dem durch den Trägerkörper strömenden Fluid.

Die erhaltene poröse Glasbeschichtung wurde durch Rasterelektronenmikroskopie untersucht. Fig. 2 zeigt die noch nicht beschichtete Oberfläche des Trägerkörpers, während Fig. 3 den fertigen Porenkörper mit beschichteter Oberfläche zeigt. Eine deutliche Aufrauhung der Beschichtung mit porösem Glas ist ersichtlich.

Der erfindungsgemäße Porenkörper mit vergrößerter spezifischer Oberfläche kann in verschiedenen Anwendungen genutzt werden, beispielsweise als:
Abgasfilter im Abgasstrom eines Ofens,
Wasserfilter in einem Aquarium oder einer Wasserleitung,
Katalysatorträger im Abgaszweig eines KFZ,
Düngerreservoir in Pflanzbehältern,
Brennstoffreservoir in Brenneinheiten.

Als Katalysatormaterialien können beispielsweise verwendet werden:
Silber,
Platin,
Palladium,
Verbindungen aus der Klasse der Perowskite (z.B. LaCoO₃)

## Patentansprüche

1. Porenkörper (01) umfassend
- einen Trägerkörper mit zahlreichen sich zwischen einem Eingang und einem Ausgang erstreckenden Kanälen (04), wobei der Trägerkörper aus einer Mehrzahl von oxidischen und/oder nicht oxidischen Körnern (03) aus Mineralien und/oder Stoffen mit einer Härte > 6 nach Mohs Härteskala besteht, die durch ein keramisches Verbindungsmittel miteinander verbunden sind, wobei zwischen den Körnern (03) miteinander verbundene Hohlräume bestehen, welche die Kanäle (04) mit einem Äquivalenzdurchmesser im Bereich von 1 bis 7 mm ausbilden,
- eine an der Oberfläche der Kanäle (04) zumindest abschnittsweise stoffschlüssig aufgebrachte Oberflächenbeschichtung aus Glas, aus welcher zur Schaffung einer porösen Glasschicht mit vergrößerter spezifischer Oberfläche säurelösliche Bestandteile aus dem Glas entfernt sind.

2. Porenkörper nach Anspruch 1, **dadurch gekennzeichnet, dass** die poröse Glasschicht eine spezifische Oberfläche von 100 bis 150 m²/g aufweist.

3. Porenkörper nach Anspruch 1 oder 2, **dadurch gekennzeichnet, dass** das Glas ein Alkaliborosilikatglas ist.

4. Porenköper nach einem der Ansprüche 1 bis 3, **dadurch gekennzeichnet, dass** die verbundenen Hohlräume mehrere nicht-lineare Kanäle bilden, mit einer Tortuosität > 2.

5. Porenköper nach einem der Ansprüche 1 bis 4, **dadurch gekennzeichnet, dass** die Hohlräume einen Volumenanteil von mehr als 50% des Trägerkörpers bilden.

6. Verwendung eines Porenkörpers gemäß einem der Ansprüche 1 bis 5 als:
- Abgasfilter im Abgasstrom eines Ofens,
- Wasserfilter in einem Aquarium oder einer Wasserleitung,
- Katalysatorträger im Abgaszweig eines KFZ,
- Düngerreservoir in Pflanzbehältern,
- Brennstoffreservoir in Brenneinheiten.

7. Verfahren zur Herstellung eines Porenkörpers (01) gemäß einem der Ansprüche 1 bis 5, die folgenden Schritte umfassend:
- Bereitstellen eines Trägerkörpers umfassend folgende Teilschritte:
∘ Mischen einer Ausgangsstoff-Masse aus
▪ oxidischen und/oder nicht-oxidischen Hartstoffen,
▪ Opfermaterial als ein organischer Binder,
▪ verschmelzbares feinteiliges Material als ein keramischer Binder,
∘ Einbringen der Masse in eine Form und Trocknen der Masse;
∘ Erhitzen der getrockneten Masse auf einen Temperaturbereich zwischen 800°C bis etwa 900°C, bei welcher der organische Binder (Opfermaterial) abgebaut wird;
∘ weiteres Erhitzten auf einen Temperaturbereich > 1.000°C, um das feinteilige Material zu verschmelzen;
- stoffschlüssiges Anbringen einer Oberflächenbeschichtung aus Glas zumindest abschnittsweise an der Oberfläche der Kanäle (04) des Trägerkörpers;
- Entfernen von säurelöslichen Bestandteilen aus der Glasschicht zur Schaffung einer porösen Glasschicht.

8. Verfahren nach Anspruch 7, wobei das stoffschlüssige Anbringen der Oberflächenbeschichtung folgende Teilschritte umfasst:
- Mischen und Mahlen folgender Ausgangsstoffe: SiO₂, B₂O₃, Na₂O, Al₂O₃;
- Erzeugen einer Fritte durch Ansetzen der vermischten und gemahlenen Ausgangsstoffe mit einem leichtflüchtigem Lösungsmittel;
- Eintauchen des Trägerkörpers in diese Fritte und Trocken der am Trägerkörper anhaftenden Fritte an Luft;
- Sintern der Fritte an die Oberfläche des Trägerkörpers bei 700 bis 1.000°C zur Ausbildung einer Glasschicht;
- Abkühlen des Trägerkörpers und der auf dessen Oberflächen gesinterten Glasschicht;
- Entfernen von säurelöslichen Bestandteilen der auf den Oberflächen ausgebildeten Glasschicht zur Schaffung einer porösen Glasschicht.

9. Verfahren nach Anspruch 8, wobei der mit der Fritte benetzte Trägerkörper vor dem Sintern für einen Zeitraum von 30 bis 90 min auf 150 bis 250°C erwärmt wird.

10. Verfahren nach einem der Ansprüche 7 bis 9, wobei als Lösungsmittel für die Fritte Aceton verwendet wird.

11. Verfahren nach einem der Ansprüche 7 bis 10, wobei das Sintern der Fritte bei ca. 780°C über einen Zeitraum von 30 min erfolgt.

12. Verfahren nach einem der Ansprüche 7 bis 11, wobei das Entfernen der säurelöslichen Bestandteile der auf den Oberflächen ausgebildeten Glasschicht mit verdünnter Salzsäure erfolgt.

## Claims

1. A porous body (01) comprising
- a carrier body with numerous channels (04) extending between an inlet and an outlet, wherein the carrier body consists of a plurality of oxidic and/or non-oxidic grains (03) which are formed of minerals and/or materials with a hardness > 6 according to the Mohs scale of hardness and which are connected to one another by a ceramic connection means, wherein interconnected cavities exist between the grains (03) and form the channels (04) having an equivalence diameter in the region of from 1 to 7 mm,
- a surface coating formed of glass, which is applied in an integrally bonded manner at least in portions to the surface of the channels (04) and from which acid-soluble constituents are removed from the glass in order to create a porous glass layer having an enlarged specific surface.

2. The porous body according to claim 1, **characterised in that** the porous glass layer has a specific surface of from 100 to 150 m²/g.

3. The porous body according to claim 1 or 2, **characterised in that** the glass is an alkali borosilicate glass.

4. The porous body according to any one of claims 1 to 3, **characterised in that** the connected cavities form a plurality of non-linear channels, with a tortuosity > 2.

5. The porous body according to any one of claims 1 to 4, **characterised in that** the cavities form a volume proportion of more than 50 % of the carrier body.

6. Use of a porous body according to any one of claims 1 to 5 as:
- an exhaust gas filter in the exhaust gas flow of a furnace,
- a water filter in an aquarium or a water line,
- a catalyst carrier in the exhaust gas branch of a motor vehicle,
- a fertiliser reservoir in plant containers,
- a fuel reservoir in firing units.

7. A method for producing a porous body (01) according to any one of claims 1 to 5, comprising the following steps:
- providing a carrier body, comprising the following sub-steps:
∘ mixing a starting material mass from
▪ oxidic and/or non-oxidic hard materials,
▪ sacrificial material as an organic binder,
▪ meltable fine-particle material as a ceramic binder,
∘ introducing the mass into a mould and drying the mass;
∘ heating the dried mass to a temperature range between 800 °C and approximately 900 °C, at which the organic binder (sacrificial material) is broken down;
∘ further heating the mass to a temperature range > 1,000 °C in order to melt the fine-particle material;
- applying a surface coating formed of glass in an integrally bonded manner at least in portions to the surface of the channels (04) of the carrier body;
- removing acid-soluble constituents from the glass layer in order to create a porous glass layer.

8. The method according to claim 7, wherein the integrally bonded application of the surface coating comprises the following sub-steps:
- mixing and grinding the following starting materials: SiO₂, B₂O₃, Na₂O, Al₂O₃;
- producing a frit by mixing the mixed and ground starting materials with a volatile solvent;
- dipping the carrier body into this frit and airdrying the frit adhering to the carrier body;
- sintering the frit on the surface of the carrier body at 700 to 1,000 °C to form a glass layer;
- cooling the carrier body and the glass layer sintered on the surfaces thereof;
- removing acid-soluble constituents of the glass layer formed on the surfaces to create a porous glass layer.

9. The method according to claim 8, wherein the carrier body wetted with the frit is heated prior to the sintering for a period of time of from 30 to 90 minutes to 150 to 250 °C.

10. The method according to any one of claims 7 to 9, wherein acetone is used as solvent for the frit.

11. The method according to any one of claims 7 to 10, wherein the frit is sintered at approximately 780 °C over a period of time of 30 minutes.

12. The method according to any one of claims 7 to 11, wherein the acid-soluble constituents of the glass layer formed on the surfaces are removed with diluted hydrochloric acid.

## Revendications

1. Corps poreux (01) comprenant
- un corps porteur pourvu de nombreux canaux (04) s'étendant entre une entrée et une sortie, le corps porteur étant composé d'une pluralité de grains (03) oxydés et/ou non oxydés en minéraux et/ou en matière d'une dureté > 6 selon l'échelle de dureté de Mohr, qui sont assemblés les uns aux autres par un produit de liaison céramique, sachant qu'il reste entre les grains (03) des cavités reliées les unes aux autres qui forment les canaux (04), avec un diamètre équivalent de l'ordre de 1 à 7 mm,
- un revêtement superficiel en verre, appliqué au moins sur une partie de la surface des canaux (04) par liaison de matière, duquel les composants solubles dans les acides sont éliminés du verre, pour créer une couche de verre poreuse, à surface spécifique agrandie.

2. Corps poreux selon la revendication 1, **caractérisé en ce que** la couche de verre poreuse présente une surface spécifique de 100 à 150 m²/g.

3. Corps poreux selon la revendication 1 ou 2, **caractérisé en ce que** le verre est un verre en borosilicate alcalin.

4. Corps poreux selon l'une quelconque des revendications 1 à 3, **caractérisé en ce que** les cavités reliées forment plusieurs canaux non linéaires, d'une tortuosité > 2.

5. Corps poreux selon l'une quelconque des revendications 1 à 4, **caractérisé en ce que** les cavités forment une part en volume de plus de 50 % du corps porteur.

6. Utilisation d'un corps poreux selon l'une quelconque des revendications 1 à 5 en tant que:
- filtre pour les gaz de fumée dans le flux des gaz de fumée d'un four,
- filtre à eau dans un aquarium ou une conduite d'eau,
- support de catalyseur dans la ligne des gaz d'échappement d'un véhicule automobile,
- réservoir à fertilisant dans des contenants pour les végétaux,
- réservoir à combustible dans des ensembles de cuisson.

7. Procédé destiné à la fabrication d'un corps poreux (01) selon l'une quelconque des revendications 1 à 5, comprenant les étapes suivantes:
- de la mise à disposition d'un corps porteur, avec les étapes partielles:
∘ du mélange d'une masse de matière de départ, composée de
▪ solides oxydés et/ou non oxydés,
▪ matériau sacrificiel en tant qu'un liant organique,
▪ matériau fusible à fines particules, en tant qu'un liant céramique,
∘ de l'introduction de la masse dans un moule et du séchage de la masse;
∘ de l'échauffement de la masse séchée à une température de l'ordre de 800 °C à environ 900 °C, lors duquel le liant organique (matériau sacrificiel) se dégrade;
∘ de la poursuite de l'échauffement à une température de l'ordre > 1.000 °C, pour faire fondre le matériau à fines particules;
- de l'application par liaison par matière d'un revêtement superficiel en verre, au moins sur des parties de la surface des canaux (04) du corps porteur;
- de l'élimination hors de la couche de verre des composants solubles dans les acides, pour créer une couche de verre poreuse.

8. Procédé selon la revendication 7, lors duquel l'application par liaison par matière du revêtement superficiel comprend les étapes partielles suivantes:
- de l'amalgame et du broyage des matières de départ suivantes: SiO₂, B₂O₃, Na₂O, Al₂O₃ ;
- de la création d'une fritte en mélangeant les matières de départ amalgamées avec un solvant aisément volatil;
- de l'immersion du corps porteur dans ladite fritte et du séchage à l'air de la fritte adhérant sur le corps porteur;
- du frittage de la fritte sur la surface du corps porteur à de 700 à 1.000 °C, pour créer une couche de verre;
- du refroidissement du corps porteur et de la couche de verre frittée sur la surface de celuici;
- de l'élimination hors de la couche de verre formée sur les surfaces des composants solubles dans les acides, pour créer une couche de verre poreuse.

9. Procédé selon la revendication 8, lors duquel, avant le frittage, on fait chauffer le corps porteur mouillé avec la fritte pendant une période de 30 à 90 min à de 150 à 250 °C.

10. Procédé selon l'une quelconque des revendications 7 à 9, lors duquel on utilise de l'acétone en tant que solvant pour la fritte.

11. Procédé selon l'une quelconque des revendications 7 à 10, lors duquel le frittage de la fritte s'effectue à env. 780 °C sur une période de 30 min.

12. Procédé selon l'une quelconque des revendications 7 à 11, lors duquel le retrait des composants solubles aux acides de la couche de verre formée sur les surfaces s'effectue à l'aide d'acide chlorhydrique dilué.
